# EUROPEAN PATENT SPECIFICATION

(11) **EP 2 604 382 B1**
(45) Date of publication and mention of the grant of the patent: **24.06.2015**
(21) Application number: 12196605.5
(22) Date of filing: 11.12.2012
(51) Int. Cl.: B23Q 5/32

(54) **Spindle mounting head of a machine tool**
Spindelmontagekopf einer Werkzeugmaschine
Tête de montage de broche d'une machine-outil

(30) Priority: 12.12.2011 IT BO20110705
(43) Date of publication of application: 19.06.2013
(73) Proprietor: Jobs S.p.A., 29122 Piacenza (IT)
(72) Inventor: Ferrari, Maurizio, 26026 Pizzighettone ( Cremona) (IT)
(74) Representative: Bianciardi, Ezio

(56) References cited:
- EP-A1- 1 992 436
- GB-A- 657 310
- GB-A- 966 565
- US-A- 3 548 711
- US-A1- 2005 236 169
- US-A1- 2008 232 914

## Description

This invention relates to a spindle mounting head of a machine tool.

More specifically, reference will be made to high/very high speed machine tools, work stations, robot systems, such as, for example, punching machines, milling machines, boring machines and the like.

The machines of the above-mentioned type have spindle mounting heads, which are placed in rotation and at the same time moved in space along the three linear axes of a reference drive system.

More specifically, these machines require a high degree of precision in the movement of the head along the axis substantially parallel to the relative axis of rotation in order to guarantee a high level of quality of the machining performed.

Particular precision is required in the machining, especially if there is the need to operate on large thicknesses or distances, and, therefore, if it is necessary for the spindle mounting head to reach large thicknesses or distances by translation along the above-mentioned axis.

The prior art machines are able to operate in these conditions, however, they do not guarantee high degrees of precision in the machining, especially when it is necessary to move the spindle mounting head to greater distances or thicknesses.

For example, machines are known wherein the spindle mounting head is mounted on a guide, inside a supporting body of the head, for moving it parallel to its axis of rotation.

More in detail, the supporting body has a main dimension of extension and the linear movement of the spindle is given by the actuation of a worm screw connected to the guide or to the head. The rotation of the worm screw causes the movement of the spindle along a direction parallel to the main dimension of extension of the body and parallel to the axis of rotation of the worm screw.

The worm screw is actuated by a motor, the drive shaft of which is connected to the worm screw by belts or gear wheels, and the worm screw is therefore mounted "cantilever-style" relative to the motor.

This type of mounting, in consideration also of the length possessed by the worm screw compatibly with the main dimension of extension of the body, gives rise to vibrations which, as a result, cause imprecisions in the machining.

In addition, a movement system of this type has numerous problems linked also with the lubrication of the components, which can lead to wear, even rapid, of the elements, and, therefore, to further clearances and imprecisions in the machining.

Further, the motor for actuating the worm screw is mounted outside the above-mentioned body, and the machine is therefore characterised by large dimensions.

A further important aspect to be considered, regarding the movement of the spindle mounting head, concerns the need to guarantee spindle rotation speed values as high as possible, whilst at the same time guaranteeing high execution precision and maintaining small overall dimensions.

However, even in this case, prior art machines are unable to satisfy this need.

Machines are known wherein the motor for actuating the spindle is located close to the spindle itself.

An optimum transmission of the torque delivered by the motor is obtained in this solution since the drive components from the motor shaft to the spindle are reduced to a minimum.

However, considering also the heavy weight of the electric motors typically used, very high inertias are created with the movement of the spindle, especially for high values of excursion of the spindle. These inertias have a considerable adverse affect on the precision of the machine and the quality of the execution.

Similarly, taking into consideration that the body has a main dimension of extension, if the motor for actuation of the spindle is mounted on an end of the body far from the end connected to the frame of the machine, inertias, vibrations and even bending of the body are created during movement of the spindle, such as to further adversely affect the execution of the machining.

Furthermore, machines are known wherein the motor for actuating the spindle is located at the end of the body connected to the frame of the machine. Prior art spindle mounting heads of this type are known from documents EP 1 992 436 A1, US 2008/232914 A1 **and** US 3548711 A.

In this solution, there are no problems regarding bending of the body and clearances, but the dimensions increase considerably. Moreover, in order to transmit the motion to the spindle, the drive motor must be equipped with a very long drive shaft or a connecting shaft is also needed between the drive motor and the spindle having an equally high dimension of extension. This results in the presence of clearances, vibrations of the drive or connecting shaft during the rotation and an inefficient transmission of the motion. Thus, in this case, too, the type of machine just described does not achieve a desirable and adequate quality of execution.

The aim of this invention is to provide a machine tool that overcomes the above mentioned drawbacks of the prior art.

A spindle mounting head of a machine tool according to appended claim 1 is therefore proposed.

In this way, it is possible to considerably reduce the clearances, the inertias and the vibrations caused during execution with the linear movement of the tool.

Moreover, it is possible in this way to check more precisely the positioning of the tool, and it is therefore possible to obtain a high quality of the execution even for large excursions of the tool holder shaft.

In effect, the tool holder shaft increases the precision and the stability of the machine, at any position adopted by the shaft with the translation. According to another advantageous aspect, the spindle mounting head according to this invention is characterised in that the first motor means are located inside the body.

Further, the head is characterised in that the second motor means are also located inside body.

A better and more efficient transmission of the rotational motion to the spindle is obtained as a result of these two aspects and at the same time the overall dimensions and the inertias which are created during the excursion of the spindle are kept low which, as already mentioned, would otherwise cause an imprecise machining.

The secondary claims define other advantageous aspects of the invention. This and other innovative features of the invention, as well as the advantages thereby achieved, will become more apparent from the following detailed description of a preferred, non-limiting example embodiment of it, with reference to the accompanying drawings, in which:
- Figure 1 is a side view of a spindle mounting head, according to this invention, in a first operating configuration;
- Figure 2 is a side view of the head of Figure 1, in a second operating configuration;
- Figure 3 is a side view of an alternative embodiment of the head of Figure 1.

With reference to the accompanying drawings, the numeral 1 denotes in its entirety a machine tool, the frame of which is denoted with the numeral 2 and is illustrated only in part in the drawing.

On the other hand, the numeral 3 indicates, in general, a spindle mounting head of the machine according to this invention.

As illustrated, the spindle mounting head 3 comprises a supporting body (4) with transversal dimensions (d), internally hollow and having an inner surface (5).

The term "transversal dimensions" means not only the space occupied solely by the supporting body, but also the extension of the space itself, that is, the extension of the space along the direction identified by the first axis D.

The body 4, in particular, extends mainly along a first axis D. Moreover, the supporting body 4 is connected to the frame 2 of the machine 1 at a relative first end 6.

Preferably, the body 4 has a substantially cylindrical shape.

The head 3 comprises a hollow spindle 8, of known type and therefore not described in detail here, supported by the body 4 at a second end 7.

The term "supported" means that the the spindle 8 is integrally connected to the supporting body 4 at the second end 7 and fixed in position.

In other words, in the context of this invention, the supporting body 4 is designed to support the spindle 8, at the second end 7, at the same time fixing the position.

The second end 7 is, relative to the body 4, opposite the first end 6 connected to the frame 2 of the machine 1.

More specifically, the hollow spindle 8 is connected to the supporting body 4 by a pair of bearings, not illustrated, with the purpose of making the rotation of the spindle 8 smoother.

Moreover, the hollow spindle 8 supports inside a tool holder shaft 9.

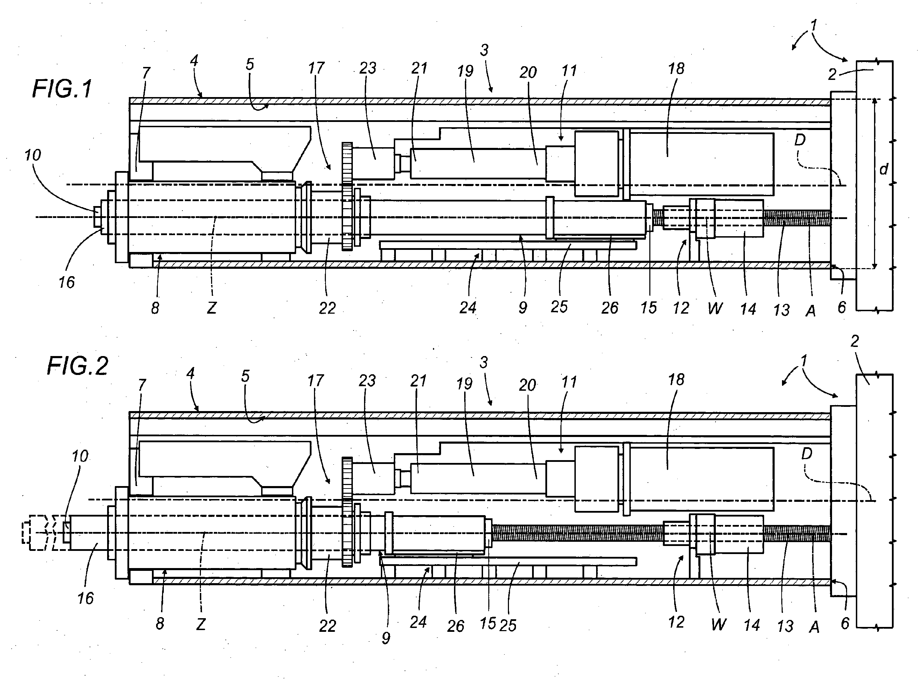

The tool holder shaft 9 is movable, along a second axis Z, between a first non-operating configuration (Figure 1), wherein it is retracted inside the supporting body 4 and is stationary, and at least a second operating configuration at which the shaft 9 is placed in rotation and extracted from the supporting body 4 after being translated along the second axis Z towards the outside of the supporting body 4.

It should be noted that Figure 2 illustrates with a continuous line an intermediate extraction position which can reach the shaft 9, whilst a dashed line illustrates its position of maximum extraction from the supporting body 4.

Preferably, according to the preferred embodiment, the second axis Z is substantially parallel to the first axis D of main extension of the supporting body 4.

More in detail, under non-operating conditions of the machine 1, it is advantageous and safe to fully retract the tool holder shaft 9 and keep it stationary, not in rotation. Under operating conditions of the machine 1, on the other hand, the hollow spindle 8 and the tool holder shaft 9 are rotated and at the same time the latter is translated along the second axis Z such that the tool 10 reaches the opportune working position.

The tool holder shaft 9 is placed in rotation by first motor means 11 connected to the supporting body 4.

More in detail, the first motor means 11 are connected directly to the hollow spindle 8, which in turn transmits the rotational motion to the tool holder shaft 9.

Further, the spindle mounting head 3 also comprises second motor means 12 for linear translation of the tool holder shaft 9, along the second axis Z. More in detail, under operating conditions, the second motor means 12 translate only the tool holder shaft 9, since, as stated previously, the spindle 8 is connected integrally with the supporting body 4 and is fixed in position at the second end 7. In this way, the spindle 8 does not participate in the translation of the tool holder shaft 9, performed by the second motor means 12.

The second motor means 12 have a relative third axis W of motion transmission connected to the tool holder shaft 9.

In detail, the second motor means 12 are located inside the transversal dimensions of the supporting body 4.

In further detail, the third axis W of the second motor means 12 is coaxial with the second axis Z of translation of the tool holder shaft 9.

According to a first embodiment, the second motor means 12 comprise a worm screw 13, connected to the tool holder shaft 9, rotating about a fourth axis A, and such as to translate the tool holder shaft 9 when placed in rotation. The second motor means 12 also comprise a motor 14, rotating about the third axis W, for rotating the worm screw 13, in such a way as to generate the translation of the tool holder shaft 9 along the second axis Z.

More precisely, as shown in Figures 1 and 2, the motor 14 is passed through by the worm screw 13.

These types of prior art motors use a scroll, not illustrated in the drawings, placed in rotation inside the motor 14. The scroll engages with the worm screw 13, and with the relative rotation defines the rotation and translation of the screw 13 along the fourth axis A. For this reason, the axis of rotation A of the worm screw 13 is also coaxial with the axis of rotation W of the motor 4. More specifically, as shown in the accompanying drawings, the fourth axis A and the third axis W are coincident.

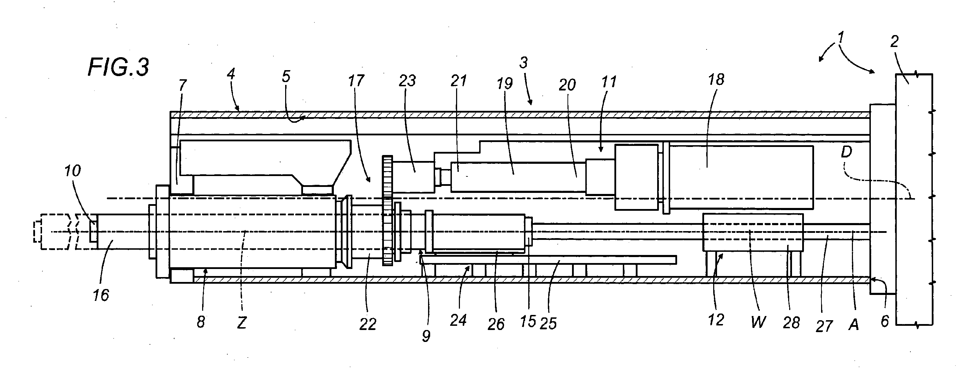

According to an alternative embodiment, illustrated in Figure 3, the second motor means 12 comprise a rod 27 connected to the tool holder shaft 9 and a tubular electric motor 28 for translating the rod 27. More in detail, the electric motor 28 operates on the rod 27 forming, similarly to the previous embodiment, a translation along the fourth axis A. Consequently, therefore, a translation of the rod 27 along the fourth axis A causes a translation of the shaft 9, connected to it, along the second axis Z.

It should be noted that in both the embodiments just described, the third axis W of rotation is coaxial with the fourth axis A of rotation. Moreover, the third axis W of rotation of the motor 14, the fourth axis A of rotation and the second axis Z of translation of the tool holder shaft 9 are coincident with each other

The above-mentioned tool holder shaft 9 is commonly known as "Quill". The "Quill", the geometry and structure of which is known, substantially consists of a cylindrical shaft which is connected at a first end 15 to the worm screw 13, whilst the tool 10 is positioned at a second end 16, opposite the first 15.

The "Quill" performs not only a translation, along the fourth axis A, but at the same time it is able to rotate to set the tool 10 in rotation and perform the machining.

The use of the "Quill" is particularly advantageous due to the degree of stability it is is able to give to the tool 10 during performance of the machining.

The hollow spindle 8 is connected to the first motor means 11 by a gear system 17, of a known type and therefore not described in further detail. More specifically, the gear system 17 is such as to simultaneously allow the rotation and translation of the tool holder shaft 9.

The first motor means 11 comprise a gear motor 18 for rotating the spindle 8 and a drive shaft 19, located at the outfeed of the gear motor 18 and connected to the spindle 8.

The drive shaft 19 is connected, at a first end 20, to the outfeed of the gear motor 18, whilst, at a second end 21 opposite the first end 20, it is connected to the gear system 17.

The gear system 17 is schematically shown in the drawing as a pair of a pair of gear wheels; a first wheel 22 is integral with the spindle 8 whilst a second wheel 23 is connected to the second end 21 of the drive shaft 19. An advantageous aspect is that the first motor means 11 are located inside the supporting body 4.

This leads to a considerable reduction in the the overall dimensions of the spindle mounting head 3 and of the machine tool 1, and also an increase in the stability of the tool holder shaft 9 when machining at a second operating configuration.

Moreover, to obtain even more advantageously a reduction in the dimensions, the second motor means 12 are also located inside the supporting body 4.

In greater detail, the motor 14 of the second motor means 12 and the gear motor 18 of the first motor means 11 are integrally connected to the inner surface 5 of the supporting body 4.

The gear motor 18 is advantageously located inside the supporting body 4, in a substantially central position between the first end 6 and the second end 7 of the supporting body 4.

In other words, by positioning the gear motor 18 between the first end 6 and the second end 7 it is possible to reduce the inertias which there would be during machining if the gear motor 18 were located close to the second end 7 of the supporting body 4, very close to the spindle 8. In addition, positioning the gear motor 18 close to the second end 6 would create problems linked also to a bending of the entire supporting body 4, which, even if only minimal, causes imprecisions in the machining and a less precise control of the machine 1.

This positioning allows a drive shaft 19 to be used which is short compared with similar drive shafts used in prior art machines.

In order to reduce the inertias, the gear motor 18 is positioned in the prior art very close to the first end 6 of the body 4, and therefore very close to the frame 2 of the machine 1. However, in this way, it is necessary to use a very long drive shaft 19, thereby resulting in considerable clearances and an inefficient transmission of the torque delivered by the gear motor 18.

This problem is solved according to this invention since a short drive shaft 18 reduces the clearances, as well as the vibrations, and at the same time stiffens the structure, thereby avoiding problems of imprecisions and difficulty in controlling the machine 1 due to inertias during the movement and bending of the supporting body 4.

To further improve the precision, the head 3 has means 24 for guiding the tool holder shaft 9, which accompany the shaft 9 during its translation and stabilise its position in any operating configuration.

The guide means 24 comprise a fixed linear guide 25 connected to the inner surface 5 of the supporting body 4, which is connected to the tool holder shaft 9. The tool holder shaft 9 is coupled to the linear guide 25, using a slide, shown in the drawing with numeral 26. The slide 26 is mounted on the tool holder shaft 9 and allows rotation of the shaft 9, during the translation, without there being interferences in the translation, for example with the movement of the worm screw 13 or of the rod 27. Lastly, the hollow spindle 8 is housed at least partly inside the supporting body 4, so as to have further reduced overall dimensions of the machine 1.

The machine 1 has fewer problems regarding lubrication and overheating. In effect, for example, the motor 14 of the second motor means 12, has, advantageously, lifelong lubrication, which allows longer operational periods and a reduction in the maintenance times and costs. Again, by way of a example, the adoption of a shorter drive shaft 19 makes the shaft 19, the spindle mounting head 3 and, therefore, the entire machine 1 less subject to inertias and bendings and also harmful overheating.

As a whole, the head 3 as described is, furthermore, easy to maintain, since all the components inside the supporting body 4 are easy to reach and dismantle, as well as extract.

The invention described is susceptible of industrial application. The invention can also be modified and adapted in several ways without thereby departing from the scope of the appended claims.

## Claims

1. A spindle mounting head of a machine tool comprising a supporting body (4) with transversal dimensions (d), internally hollow, having a main direction of extension along a first axis (D) and having an inner surface (5), and adapted for being connected to the machine (1) at a first end (6), a hollow spindle (8) connected to the supporting body (4), a tool holder shaft (9) passing through the spindle (8) and movable, along a second axis (Z), substantially parallel to the first axis (D), between a first non-operating configuration, wherein the shaft (9) is stationary and retracted inside the supporting body (4), and at least a second operating configuration, wherein the shaft (9) is placed in rotation and moved along the second axis (Z) outside the supporting body (4); the head (3) also comprising first motor means (11), connected to the supporting body (4), configured for rotating the hollow spindle (8) and the tool holder shaft (9); second motor means (12) connected to the tool holder shaft (9) for linearly moving the latter along the second axis (Z); the second motor means (12) having a relative third axis (W) of motion transmission connected to the tool holder shaft (9) and coaxial with the second axis (Z) of translation of the tool holder shaft (9); the second motor means being located inside the transversal dimensions (d) of the supporting body (4); the spindle (8) being supported by the supporting body (4) at a second end (7), opposite the first end (6), and is housed at least partly inside the supporting body (4); **characterized in that** the spindle (8) is integrally connected to the supporting body (4) at the second end (7) and fixed in position.

2. The head according to claim 1, **characterised in that** the second motor means (12) comprise a worm screw (13), connected to the tool holder shaft (9) and rotating about a fourth axis (A), such as to translate the tool holder shaft (9) when placed in rotation, and a motor(14), rotating about the third axis (W), for rotating the screw (13).

3. The head according to claim 1, **characterised in that** the second motor means (12) comprise a rod (27) connected to the tool holder shaft (9) and a tubular electric motor (28) for translating the rod (27).

4. The head according to any one of the preceding claims, **characterised in that** the first motor means (11) are located inside the supporting body (4).

5. The head according to any one of the preceding claims, **characterised in that** the second motor means (12) are located inside the supporting body (4).

6. The head according to any one of the preceding claims, **characterised in that** the first motor means (11) comprise a gear motor (18) for rotating the hollow spindle (8) and a shaft (19), located at the outfeed of the gear motor (18), for transmitting the motion to the hollow spindle (8); the gear motor (18) being located inside the supporting body (4), in a substantially central position between the first end (6) and the second end (7) of the supporting body (4).

7. The head according to any one of the preceding claims, **characterised in that** it comprises means (24) for guiding the tool holder shaft (9) during its linear translation; the guide means (24) comprise a fixed linear guide (25) connected to the inner surface (5) of the supporting body (4) and a slide (26), mounted on the tool holder shaft (9) and slidably connected to the linear guide (25).

## Patentansprüche

1. Spindelmontagekopf einer Werkzeugmaschine, umfassend einen Tragekörper (4) mit Querabmessungen (d), der innen hohl ist, aufweisend eine Hauptausdehnungsrichtung entlang einer ersten Achse (D) und eine innere Oberfläche (5), und ausgelegt, um mit der Maschine (1) an einem ersten Ende (6) verbunden zu werden, eine hohle Spindel (8), verbunden mit dem Tragekörper (4), eine Werkzeughalterwelle (9), die durch die Spindel (8) führt und entlang einer zweiten Achse (Z), die im Wesentlichen parallel zur ersten Achse (D) verläuft, zwischen einer ersten Nichtbetriebskonfiguration, in der die Welle (9) fest und in den Tragekörper (4) eingefahren ist, und mindestens einer zweiten Betriebskonfiguration, in der die Welle (9) gedreht und entlang der zweiten Achse (Z) außerhalb des Tragekörpers (4) bewegt wird, bewegbar ist, wobei der Kopf (3) auch erste Motormittel (11) umfasst, verbunden mit dem Tragekörper (4), ausgebildet, um die hohle Spindel (8) und die Werkzeughalterwelle (9) zu drehen, zweite Motormittel (12), verbunden mit der Werkzeughalterwelle (9) für deren lineare Bewegung entlang der zweiten Achse (Z), wobei die zweiten Motormittel (12) eine relative dritte Achse (W) zur Bewegungsübertragung aufweisen, die mit der Werkzeughalterwelle (9) verbunden und gleichachsig zur zweiten Achse (Z) zur Verschiebung der Werkzeughalterwelle (9) angeordnet ist, wobei die zweiten Motormittel in den Querabmessungen (d) des Tragekörpers (4) angeordnet sind, wobei die Spindel (8) vom Tragekörper (4) an einem zweiten Ende (7) getragen wird, das gegenständig zum ersten Ende (6) angeordnet ist und mindestens teilweise im Tragekörper (4) untergebracht ist, **dadurch gekennzeichnet, dass** die Spindel (8) fest mit dem Tragekörper (4) am zweiten Ende und fixiert an Ort und Stelle verbunden ist.

2. Kopf nach Anspruch 1, **dadurch gekennzeichnet, dass** die zweiten Motormittel (12) eine Madenschraube (13) umfassen, verbunden mit der Werkzeughalterwelle (9) und sich drehend um eine vierte Achse (A), um die Werkzeughalterwelle (9), wenn diese in Drehung versetzt wird, zu verschieben, und einen Motor (14), sich drehend um die dritte Achse (W), um die Schraube (13) zu drehen.

3. Kopf nach Anspruch 1, **dadurch gekennzeichnet, dass** die zweiten Motormittel (12) einen Stab (27) umfassen, verbunden mit der Werkzeughalterwelle (9), und einen elektrischen Rohrmotor (28) zur Verschiebung des Stabs (27).

4. Kopf nach einem der vorhergehenden Ansprüche, **dadurch gekennzeichnet, dass** die ersten Motormittel (11) im Tragekörper (4) befindlich sind.

5. Kopf nach einem der vorhergehenden Ansprüche, **dadurch gekennzeichnet, dass** die zweiten Motormittel (12) im Tragekörper (4) befindlich sind.

6. Kopf nach einem der vorhergehenden Ansprüche, **dadurch gekennzeichnet, dass** die ersten Motormittel (11) einen Getriebemotor (18) umfassen, um die hohle Spindel (8) und die Welle (19) zu drehen, befindlich am Auslass des Getriebemotors (18), um die Bewegung auf die hohle Spindel (8) zu übertragen, wobei der Getriebemotor (18) im Tragekörper (4) befindlich ist, und zwar in einer im Wesentlichen mittigen Position zwischen dem ersten Ende (6) und dem zweiten Ende (7) des Tragekörpers (4).

7. Kopf nach einem der vorhergehenden Ansprüche, **dadurch gekennzeichnet, dass** er Mittel (24) zum Führen der Werkzeughalterwelle (9) während deren linearen Verschiebung umfasst, wobei die Führungsmittel (24) eine fixierte Linearführung (25) umfassen, verbunden mit der inneren Oberfläche (5) des Tragekörpers (4), und ein Gleitstück (26), montiert an der Werkzeughalterwelle (9) und verschiebbar verbunden mit der Linearführung (25).

## Revendications

1. Tête de montage de broche d'une machine-outil comprenant un corps de support (4) avec des dimensions transversales (d), creuse à l'intérieur, ayant une direction principale d'extension le long d'un premier axe (D) et ayant une surface interne (5) et adaptée pour être reliée à la machine (1) à une première extrémité (6), une broche creuse (8) reliée au corps de support (4), un arbre porte-outil (9) traversant la broche (8) et mobile, le long d'un second axe (Z), substantiellement parallèle au premier axe (D), entre une première configuration non fonctionnelle, dans laquelle l'arbre (9) est à l'arrêt et rétracté à l'intérieur du corps de support (4), et au moins une seconde configuration fonctionnelle, dans laquelle l'arbre (9) est placé en rotation et peut se déplacer le long du second axe (Z) à l'extérieur du corps de support (4) ; la tête (3) comprenant aussi des premiers moyens motorisés (11) reliés au corps de support (4), configurés pour tourner la broche creuse (8) et l'arbre porte-outil (9) ; des seconds moyens motorisés (12) reliés à l'arbre porte-outil (9) pour déplacer linéairement ce dernier le long du second axe (Z) ; les seconds moyens motorisés (12) ayant un troisième axe correspondant (W) de transmission de mouvement relié à l'arbre porte-outil (9) et coaxial au second axe (Z) de translation de l'arbre porte-outil (9) ; les seconds moyens motorisés étant situés à l'intérieur des dimensions transversales (d) du corps de support (4) ; la broche (8) étant supportée par le corps de support (4) au niveau d'une seconde extrémité (7), opposée à la première extrémité (6), et est logée au moins en partie à l'intérieur du corps de support (4) ; **caractérisée en ce que** la broche (8) est solidaire du corps de support (4) au niveau de la seconde extrémité (7) et dans une position fixe.

2. Tête selon la revendication 1, **caractérisée en ce que** les seconds moyens motorisés (12) comprennent une vis sans fin (13) reliée à l'arbre porte-outil (9) et tournant autour d'un quatrième axe (A) de manière à translater l'arbre porte-outil (9) lorsqu'il est placé en rotation, et un moteur (14), tournant autour du troisième axe (W), pour faire tourner la vis (13).

3. Tête selon la revendication 1, **caractérisée en ce que** les seconds moyens motorisés (12) comprennent une tige (27) reliée à l'arbre porte-outil (9) et un moteur électrique tubulaire (28) pour faire coulisser la tige (27).

4. Tête selon l'une quelconque des revendications précédentes, **caractérisée en ce que** les premiers moyens motorisés (11) sont situés à l'intérieur du corps de support (4).

5. Tête selon l'une quelconque des revendications précédentes, **caractérisée en ce que** les seconds moyens motorisés (12) sont situés à l'intérieur du corps de support (4).

6. Tête selon l'une quelconque des revendications précédentes, **caractérisée en ce que** les premiers moyens motorisés (11) comprennent un moteur à engrenages (18) pour faire tourner la broche creuse (8) et un arbre (19), situé à la sortie du moteur à engrenages (18), pour transmettre le déplacement à la broche creuse (8) ; le moteur à engrenages (18) étant situé à l'intérieur du corps de support (4), dans une position substantiellement centrale entre la première extrémité (6) et la seconde extrémité (7) du corps de support (4).

7. Tête selon l'une quelconque des revendications précédentes, **caractérisée en ce qu'**elle comprend des moyens (24) servant à guider l'arbre porte-outil (9) lors de sa translation linéaire ; les moyens de guidage (24) comprennent un guide linéaire fixe (25) relié à la surface interne (5) du corps de support (4) et un coulisseau (26), monté sur l'arbre porte-outil (9) et pouvant être relié de façon coulissante au guide linéaire (25).
